# EUROPÄISCHE PATENTSCHRIFT

(11) **EP 2 004 462 B1**
(45) Veröffentlichungstag und Bekanntmachung des Hinweises auf die Patenterteilung: **09.09.2015**
(21) Anmeldenummer: 07727269.8
(22) Anmeldetag: 23.03.2007
(51) Int. Cl.: B60T 8/1755, B60T 8/32, B60T 7/22, B60T 17/22

(54) **DEAKTIVIERUNG EINER SICHERHEITSFUNKTION DURCH BREMSEN**
DEACTIVATION OF A SAFETY FUNCTION BY BRAKING
DESACTIVATION D'UNE FONCTION DE SECURITE PAR FREINAGE

(30) Priorität: 03.04.2006 DE 102006015488; 21.08.2006 DE 102006039121
(43) Veröffentlichungstag der Anmeldung: 24.12.2008
(73) Patentinhaber: Robert Bosch GmbH, 70442 Stuttgart (DE)
(72) Erfinder: STABREY, Stephan, 70376 Stuttgart (DE)
(86) Internationale Anmeldenummer: PCT/EP2007/052795
(87) Internationale Veröffentlichungsnummer: WO 2007/113135

(56) Entgegenhaltungen:
- EP-A- 1 705 624
- EP-A1- 0 976 627
- WO-A-2005/061264
- DE-A1- 4 436 819
- DE-A1-102005 012 037

## Beschreibung

### Stand der Technik

Aus der DE 10 2004 038 734 A1 sind ein Verfahren und eine Vorrichtung zur Auslösung einer Notbremsung eines Fahrzeugs zur Vermeidung einer Kollision bzw. zur Verminderung der Kollisionsschwere bekannt. Dabei wird in Abhängigkeit einer ermittelten Kollisionswahrscheinlichkeit eine automatische Notbremsung ausgelöst.

EP0976627 zeigt ein Verfahren zur Deaktivierung einer aktivierten automatischen Sicherheitsfunktion.

### Offenbarung der Erfindung

Die Erfindung betrifft ein Verfahren zur Deaktivierung einer aktivierten automatischen Notbremsung bei einem Fahrzeug (304), wobei die Deaktivierung abhängig von einem durch den Fahrer durchgeführten Bremsvorgang (303) dann erfolgt und die automatische Notbremsung dann beendet wird, - wenn die durch den Fahrer vorgegebene Bremsintensität einen vorgegebenen Schwellenwert überschreitet (304) oder - wenn der vom Fahrer vorgegebene Bremsdruck (p) größer als der von der Sicherheitsfunktion momentan erzeugte Bremsdruck oder größer als ein vorgegebener Anteil (k) oder größer als ein vorgegebenes Vielfaches (k) des von der Sicherheitsfunktion momentan erzeugten Bremsdrucks ist.

Eine vorteilhafte Ausgestaltung der Erfindung ist dadurch gekennzeichnet, dass es sich bei der automatischen Notbremsung um eine automatische Notbremsung nach einer erfolgten Kollision handelt (301).

Eine vorteilhafte Ausgestaltung der Erfindung ist dadurch gekennzeichnet, dass es sich bei der automatischen Notbremsung um eine automatische Notbremsung nach der Detektion einer bevorstehenden Kollision handelt (301).

Eine vorteilhafte Ausgestaltung der Erfindung ist dadurch gekennzeichnet, dass es sich bei der durch den Fahrer vorgegebene Bremsintensität um die der Bremspedalstellung entsprechende Bremsintensität handelt.

Weiter umfasst die Erfindung eine Vorrichtung, enthaltend Mittel zur Durchführung der erfindungsgemäßen Verfahren.

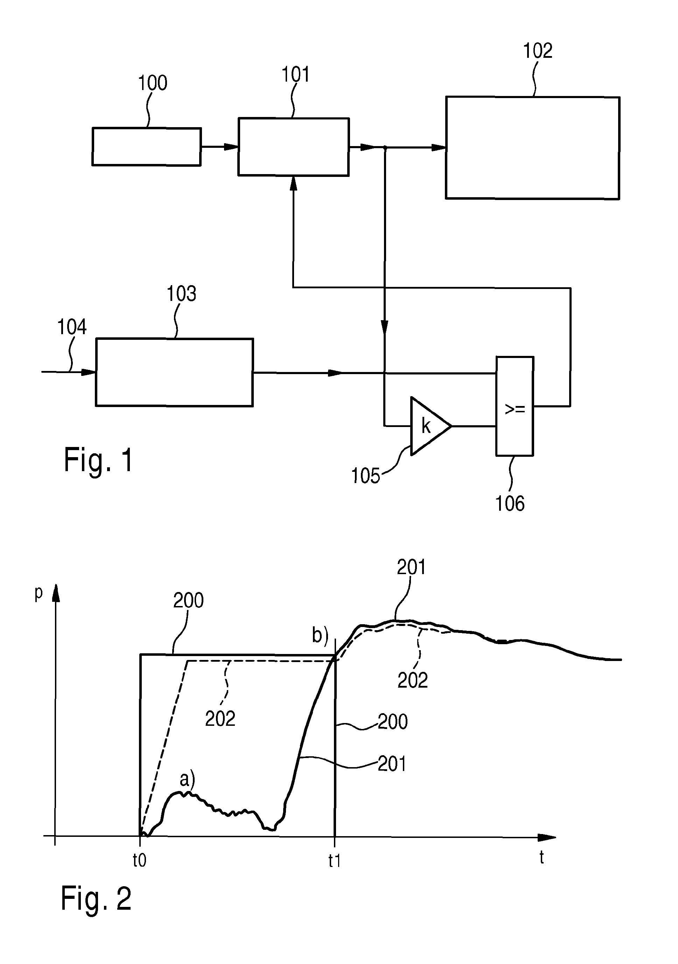

Die Zeichnung umfasst die Abbildungen 1, 2 und 3.

Heutige Sicherheitssysteme sind üblicherweise nicht überstimmbar. Um neue Sicherheitssysteme in den Markt einführen zu können, werden Überstimmbarkeitskonzepte benötigt. Aufgabe der Erfindung ist es, für ein System, dass eine automatische Bremsung auslöst, die Überstimmbarkeit durch den Fahrer zu ermöglichen.

Bekannte Strategien zur Deaktivierung von Fahrzeugsystemen wie ACC adressieren "normale" Fahrsituationen, in denen mit entsprechenden Fahrerbediengrößen zu rechnen ist. Soll jedoch eine Sicherheitsfunktion betrachtet werden, die in einer Notsituation eingreift, muss mit anderen Reaktionen des Fahrers gerechnet werden. Insbesondere ist eine leichte Betätigung des Bremspedals nicht als Indikator zur Abschaltung eines fahrerunabhängig durchgeführten Bremseingriffs geeignet.

Kern der Erfindung ist es, eine automatische Bremsung eines Sicherheitssystems nur dann zu beenden, wenn der vom Fahrer über das Bremspedal vorgegebene Bremsdruck (oder eine entsprechende Ersatzgröße) einen vorbestimmten Anteil oder ein vorbestimmtes Vielfaches des von der Sicherheitsfunktion aufgebrachten Bremsdrucks übersteigt.

Eine Sicherheitsfunktion löst zum Beispiel nach der Erkennung einer leichten Kollision eine Vollbremsung aus, um die Schwere einer drohenden Folgekollision zu vermindern. Die Bremsung kann aber auch auf Basis von Umfeldsensorik zur Unfallvermeidung ausgelöst werden.

Durch die erfindungsgemäße Deaktivierungsstrategie wird die automatisch ausgelöste Bremsung erst dann beendet, wenn der Fahrer selbst stark bremst (Abb. 2, Bereich b)). Dies kann z. B. dadurch gekennzeichnet sein, dass der vom Fahrer vorgegebene Bremsdruck größer als der von der Sicherheitsfunktion momentan erzeugte ist (wie in Abb. 2 für den Fall k=1 dargestellt). Die Deaktivierung der Sicherheitsfunktion erfolgt somit nur dann, wenn der Fahrer selbst eine entsprechende Fahrzeugverzögerung hervorrufen kann und somit die Unterstützung des Systems nicht benötigt.

Aufgrund dieser Strategie hat die Deaktivierung keine oder geringe Auswirkungen auf die Fahrzeugbewegung, da die zunächst vom System erzeugte Bremswirkung vom Fahrer fortgesetzt wird. Dem Fahrer wird trotzdem die volle Kontrolle zurückgegeben, so dass er z. B. durch Verringerung des Bremsdrucks gezielt die Fahrzeuggeschwindigkeit beeinflussen kann. Dieses Deaktivierungskriterium kann mit anderen, z. B. situationsabhängigen Deaktivierungskriterien zu einer Deaktivierungsentscheidung verknüpft werden.

In einer Notsituation können aufgrund der Insassenbewegung zufällige Pedalbetätigungen auftreten. Hat der Fahrer z. B. zum Zeitpunkt der automatisch ausgelösten Bremsung den Fuß über dem Bremspedal, kann die durch die Verzögerung hervorgerufene Vorverlagerung des Insassen zu einer Pedalbetätigung führen (Abb. 2, Bereich a)), die nicht als Anzeichen eines gewollten Bremsens interpretiert werden kann. Diese Pedalbetätigung ist deutlich geringer als der vom System vorgegeben Bremsdruck, so dass dies nicht zur Deaktivierung der Sicherheitsfunktion führt und diese somit den Fahrer optimal unterstützen kann.

Der Aufbau der vorliegenden Erfindung ist in Fig. 1 dargestellt. Abhängig von den Ausgangssignalen der Sensoren 100 wird dort eine Sicherheitsfunktion 101 aktiviert. Diese sendet eine Bremsanforderung an das Bremssystem 102, welches daraufhin die Fahrzeugbremsen betätigt.
Zugleich wird mittels eines Sensors 103, welcher z.B. als Bremspedalsensor ausgeprägt ist, ein Bremswunsch bzw. eine Bremspedalbetätigung des Fahrers 104 erfasst. Dieser Fahrerbremswunsch wird einem Vergleicher 106 zugeführt. Dieser Vergleicher vergleicht die Intensität dieses Fahrerbremswunsches mit der Intensität der von der Sicherheitsfunktion durchgeführten Bremsung, wobei die Intensität der Sicherheitsfunktion durchgeführten Bremsung zuvor noch in Block 105 mit einem Faktor k multipliziert wurde. Ist die Intensität des Fahrerbremswunsches stärker als die mit dem Faktor k multiplizierte Intensität der von der Sicherheitsfunktion durchgeführten Bremsung, dann wird ein Signal an Block 101 weitergereicht und damit die in Block 102 durchgeführte fahrerunabhängige Bremsung deaktiviert.

In Fig. 2 ist in Abszissenrichtung die Zeit t aufgetragen und in Ordinatenrichtung der Bremsdruck p. 200 kennzeichnet den fahrerunabhängigen, von der Sicherheitsfunktion angeforderten, Bremsdruck. Zum Zeitpunkt t0 wird ein wird durch ein auftretendes Ereignis, dabei kann es sich beispielsweise um eine detektierte Kollision oder eine unmittelbar bevorstehende Kollision handeln, ein fahrerunabhängiger Bremsvorgang durchgeführt. Dies äußert sich in Fig. 2 durch den unmittelbaren Anstieg des angeforderten Bremsdrucks 200.
201 kennzeichnet den einer Bremspedalbetätigung des Fahrers entsprechenden fahrerabhängigen Bremsdruck. Der strichlierte Verlauf 202 kennzeichnet den wirkenden Bremsdruck. Der rampenförmiger Aufbau nach t0 ist dadurch bedingt, dass der von der Sicherheitsfunktion angeforderte Bremsdruck nicht instantan aufgebaut werden kann. Zum Zeitpunkt t0 betätigt der Fahrer leicht das Bremspedal, erkennbar an dem mit a) gekennzeichneten Abschnitt der Kurve 201.
Dieser leichten Betätigung folgt eine starke Betätigung, zum Zeitpunkt t1 ist der der Bremspedalbetätigung entsprechende Bremsdruck ebenso groß wie der fahrerunabhängig aufgebaute Bremsdruck. Dies wird als Zeichen, dass der Fahrer die augenblickliche Situation beherrscht, gedeutet und als Kriterium, dass die fahrerunabhängige Bremsung beendet werden kann. Daraufhin wird die fahrerunabhängige Bremsung beendet, dies ist durch unmittelbaren Abbau der Bremsdruckanforderung 200 der Sicherheitsfunktion ersichtlich. Damit erhält der Fahrer nun die volle Kontrolle über das Fahrzeug zurück.

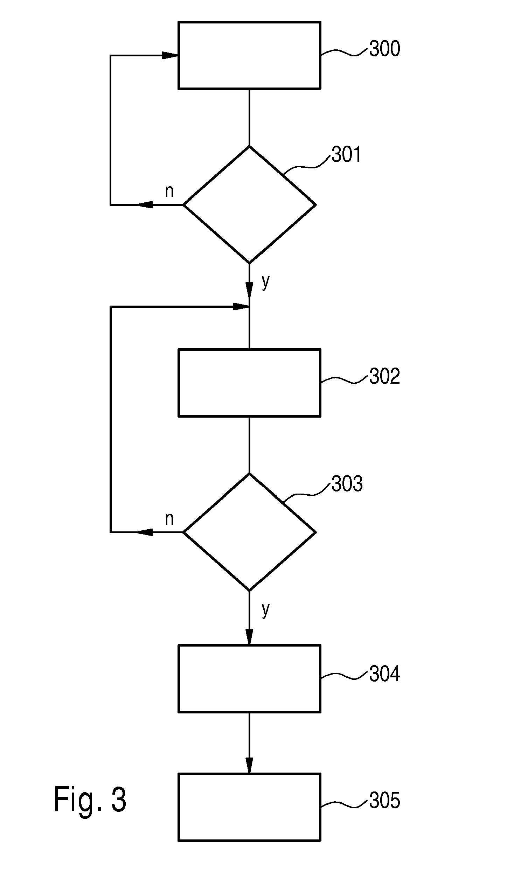

Der Ablauf des erfindungsgemäßen Verfahrens ist in Fig. 3 dargestellt. Nach dem Start des Verfahrens in Block 300 wird in Block 301 abgefragt, ob die Aktivierungsbedingung für die Sicherheitsfunktion erfüllt ist. Ist diese nicht erfüllt, wird zu Block 300 zurückgegangen. Ist diese jedoch erfüllt, dann wird in Block 302 eine der aktivierten Sicherheitsfunktion zugeordnete Sicherheitsmaßnahme ausgelöst, z.B. ein fahrerunabhängiger Bremsvorgang. Anschließend wird in Block 303 abgefragt, ob eine Deaktivierungsbedingung für die Sicherheitsfunktion durch den Fahrer erfüllt ist. Ist dies nicht der Fall, dann wird zu Block 302 zurückgegangen. Ist die Deaktivierungsbedingung jedoch erfüllt, dann wird anschließend in Block 304 die Sicherheitsfunktion deaktiviert. In Block 305 endet das Verfahren.

## Patentansprüche

1. Verfahren zur Deaktivierung einer aktivierten automatischen Notbremsung bei einem Fahrzeug (304),
wobei die Deaktivierung abhängig von einem durch den Fahrer durchgeführten Bremsvorgang (303) dann erfolgt und die automatische Notbremsung dann beendet wird,
- wenn die durch den Fahrer vorgegebene Bremsintensität einen vorgegebenen Schwellenwert überschreitet (304) oder
- wenn der vom Fahrer vorgegebene Bremsdruck (p) größer als der von der Sicherheitsfunktion momentan erzeugte Bremsdruck oder größer als ein vorgegebener Anteil (k) oder größer als ein vorgegebenes Vielfaches (k) des von der Sicherheitsfunktion momentan erzeugten Bremsdrucks ist.

2. Verfahren nach Anspruch 1, **dadurch gekennzeichnet, dass** es sich bei der automatischen Notbremsung um eine automatische Notbremsung nach einer erfolgten Kollision handelt (301).

3. Verfahren nach Anspruch 1, **dadurch gekennzeichnet, dass** es sich bei der automatischen Notbremsung um eine automatische Notbremsung nach der Detektion einer bevorstehenden Kollision handelt (301).

4. Verfahren nach Anspruch 1, **dadurch gekennzeichnet, dass** es sich bei der durch den Fahrer vorgegebene Bremsintensität um die der Bremspedalstellung entsprechende Bremsintensität handelt.

5. Vorrichtung, enthaltend Mittel zur Deaktivierung einer aktivierten automatischen Notbremsung bei einem Fahrzeug (304), wobei die Mittel derart ausgestaltet sind, dass die Deaktivierung abhängig von einem durch den Fahrer durchgeführten Bremsvorgang (303) dann erfolgt und die automatische Notbremsung dann beendet wird,
- wenn die durch den Fahrer vorgegebene Bremsintensität einen vorgegebenen Schwellenwert überschreitet (304) oder
- wenn der vom Fahrer vorgegebene Bremsdruck (p) größer als der von der Sicherheitsfunktion momentan erzeugte Bremsdruck oder größer als ein vorgegebener Anteil (k) oder größer als ein vorgegebenes Vielfaches (k) des von der Sicherheitsfunktion momentan erzeugten Bremsdrucks ist.

## Claims

1. Method for deactivating an activated automatic emergency braking operation in a vehicle (304),
wherein the deactivation takes place as a function of a braking process (303) carried out by the driver and the automatic emergency braking operation is ended
- if the braking intensity predefined by the driver exceeds (304) a predefined threshold value or
- if the brake pressure (p) predefined by the driver is greater than the brake pressure generated instantaneously by the safety function or greater than a predefined portion (k) or greater than a predefined multiple (k) of the brake pressure generated instantaneously by the safety function.

2. Method according to Claim 1, **characterized in that** the automatic emergency braking operation is an automatic emergency braking operation after a collision has taken place (301).

3. Method according to Claim 1, **characterized in that** the automatic emergency braking operation is an automatic emergency braking operation after the detection of an imminent collision (301).

4. Method according to Claim 1, **characterized in that** the braking intensity which is predefined by the driver is the braking intensity which corresponds to the brake pedal position.

5. Device, containing means for deactivating an activated automatic emergency braking operation in a vehicle (304), wherein the means is configured such that the deactivation takes place as a function of a braking process (303) carried out by the driver and the automatic emergency braking operation is ended
- if the braking intensity predefined by the driver exceeds (304) a predefined threshold value or
- if the brake pressure (p) predefined by the driver is greater than the brake pressure generated instantaneously by the safety function or greater than a predefined portion (k) or greater than a predefined multiple (k) of the brake pressure generated instantaneously by the safety function.

## Revendications

1. Procédé de désactivation d'un freinage d'urgence automatique activé dans un véhicule (304), la désactivation s'effectuant en fonction d'une opération de freinage (303) effectuée par le conducteur et le freinage d'urgence automatique étant terminé
- lorsque l'intensité de freinage prédéfinie par le conducteur dépasse une valeur seuil prédéfinie (304) ou
- lorsque la pression de freinage prédéfinie par le conducteur (p) est supérieure à la pression de freinage générée instantanément par la fonction de sécurité ou est supérieure à une proportion prédéfinie (k) ou est supérieure à un multiple prédéfini (k) de la pression de freinage générée instantanément par la fonction de sécurité.

2. Procédé selon la revendication 1, **caractérisé en ce que** le freinage d'urgence automatique est un freinage d'urgence automatique après une collision (301).

3. Procédé selon la revendication 1, **caractérisé en ce que** le freinage d'urgence automatique est un freinage d'urgence automatique après la détection d'une collision imminente (301).

4. Procédé selon la revendication 1, **caractérisé en ce que** l'intensité de freinage prédéfinie par le conducteur est l'intensité de freinage correspondant à la position de la pédale de frein.

5. Dispositif comprenant des moyens pour désactiver un freinage d'urgence automatique activé dans un véhicule (304), les moyens étant configurés de telle sorte que la désactivation s'effectue en fonction d'une opération de freinage (303) effectuée par le conducteur et que le freinage d'urgence automatique soit terminé
- lorsque l'intensité de freinage prédéfinie par le conducteur dépasse une valeur seuil prédéfinie (304) ou
- lorsque la pression de freinage prédéfinie par le conducteur (p) est supérieure à la pression de freinage générée instantanément par la fonction de sécurité ou est supérieure à une proportion prédéfinie (k) ou est supérieure à un multiple prédéfini (k) de la pression de freinage générée instantanément par la fonction de sécurité.
